# EUROPEAN PATENT SPECIFICATION

(11) **EP 2 747 297 B1**
(45) Date of publication and mention of the grant of the patent: **10.10.2018**
(21) Application number: 12728939.5
(22) Date of filing: 10.05.2012
(51) Int. Cl.: H04B 1/38, H04W 88/02, H04W 12/06, H04L 1/00, G06K 19/077

(54) **LTE COMMUNICATION CARD AND LTE COMMUNICATION SYTEM**
LTE-KOMMUNIKATIONSKARTE UND LTE-KOMMUNIKATIONSSYSTEM
CARTE DE COMMUNICATION LTE ET SYSTÈME DE COMMUNICATION LTE

(30) Priority: 02.12.2011 CN 201110396406
(43) Date of publication of application: 25.06.2014
(73) Proprietor: Huizhou TCL Mobile Communication Co., Ltd., Huizhou, Guangdong 516006 (CN)
(72) Inventor: ZHAO, Shiqing, Huizhou Guangdong 516006 (CN); HU, Xuelong, Ronald, Huizhou Guangdong 516006 (CN); DING, Yang, Huizhou Guangdong 516006 (CN)
(74) Representative: ZHAOffice SPRL
(86) International application number: PCT/CN2012/075301
(87) International publication number: WO 2013/078832

(56) References cited:
- EP-A1- 2 383 673
- CN-A- 101 771 729
- CN-A- 101 835 282
- CN-U- 201 700 006
- CN-U- 201 986 165
- CN-U- 201 986 165
- US-A1- 2001 006 902
- US-A1- 2010 026 816

## Description

### FIELD OF THE INVENTION

The present disclosure generally relates to the technical field of communication electronics, and more particularly, to a Long Term Evolution (LTE) communication card and an LTE communication system.

### BACKGROUND OF THE INVENTION

Nowadays, more and more electronic devices such as computer products or digital products are provided with SDIO (Secure Digital Input and Output) card slots. The SDIO card slots support use of SDIO cards provided with SDIO interfaces so that the electronic devices can use the SDIO cards to read or store relevant data. The SDIO card slots can also support SD cards.

Additionally, as a 3^{rd} generation (3G) wireless communication standard, the LTE communication standard has found wide application in the prior art. Electronic devices adopting the LTE communication standard can provide high-speed and stable network services for users.

However, generally speaking, conventional electronic devices that support the LTE communication standard must have an LTE communication module incorporated therein early in the manufacturing stage, and this leads to a high production cost. Moreover, the electronic devices provided with the SDIO card slots will be unable to provide the LTE communication function if no LTE communication module is built therein.

Accordingly, an LTE communication card which, when being inserted into an electronic device provided with an SDIO card slot, can impart an LTE communication function to the electronic device is expected. Such an LTE communication card will greatly enrich functions of electronic devices and improve users' experiences, and reduce the production cost of the electronic devices to some extent.

An American patent application US2001/0006902 (D1) discloses a SD memory card with a radio interface function, which comprises a SD memory card and an antenna module. The antenna module is attached to the SD memory card via a connector such that the SD memory card is capable of performing the radio interface function. However, D1 fails to teach or suggest the SD memory is used as a LTE communication card. Specifically, D1 also fails to teach or suggest the SD memory card may store the data which are originally stored by a USIM card or a SIM card such that the SD memory card is able to replace the conventional USIM card or SIM card and omit the special card slot for the USIM card or SIM card.

A Chinese patent CN201986165 (D2) discloses a wireless communication device using a SDIO interface, which can be used in the LTE communication standard. However, D2 also fails to teach or suggest the memory of the wireless communication device may store the data which are originally stored by a USIM card or a SIM card such that the SD memory card is able to replace the conventional USIM card or SIM card and omit the special card slot for the USIM card or SIM card.

A European patent application EP2383673 (D3) discloses a mobile network access device, which comprises an antenna, a RF processing unit, a power supply managing unit, a SIM unit, a baseband processing unit, a storing unit, a SD slave controller and a SD port. Although the mobile network access device comprises the SIM unit, however, D3 directly integrates the SIM chip into the mobile network access device instead of employing the memory of the mobile network access device to store the data originally stored in a USIM card or a SIM card. Therefore, it is absolute that the mobile network access device of D3 is comparatively large since it directly integrates the SIM chip into the mobile network access device.

### SUMMARY OF THE INVENTION

An objective of the present disclosure is to provide an LTE communication card and an LTE communication system, which can impart an LTE wireless communication function to an electronic device that supports the SDIO protocol so as to enrich functions of the electronic device, improve users' experiences and reduce the production cost.

To achieve the aforesaid objective, the present disclosure provides an LTE communication card, which comprises: an SDIO interface, comprising data pins adapted to be selectively inserted into an SDIO card slot of an electronic device; an LTE baseband processing unit connected to the data pins, being configured to obtain from the data pins a first data signal supplied by the electronic device and modulate the first data signal; an LTE transceiving unit connected to the LTE baseband processing unit, being configured to obtain the first data signal that has been modulated; and an antenna unit connected to the LTE transceiving unit, being configured to transmit the first data signal, and further obtain an LTE RF signal from the outside and transmit the LTE RF signal to the LTE transceiving unit, and the LTE RF signal being transmitted by the LTE transceiving unit to the LTE baseband processing unit and then demodulated by the LTE baseband processing unit to obtain a second data signal for transmission to the electronic device via the data pins. The LTE communication card further comprises a memory connected to the LTE baseband processing unit and configured to store data originally stored in a Universal Subscriber Identity Module (USIM) card or a Subscriber Identity Module (SIM) card, such that the electronic device using the LTE communication card is capable of omitting a card slot for the USIM card or the SIM card. The antenna unit comprises an LTE main antenna and an LTE Multiple-Input Multiple-Output (MIMO) antenna, one of the LTE main antenna and the LTE MIMO antenna is disposed in an edge region opposite to the SDIO interface at a side of an enclosure of the LTE communication card, and another of the LTE main antenna and the LTE MIMO antenna is disposed in an edge region opposite to the SDIO interface at an opposite side of the enclosureof the LTE communication card.

Preferably, the LTE communication card further comprises a memory connected to the LTE baseband processing unit and configured to store a subscriber identification number (SIN), an authentication key, a location area identifier (LAI), a temporary subscriber identifier (TSI), a personal identification number (PIN), an unlock code, telephone book data, subscriber identification authentication data, an encryption algorithm and an encryption key.

Preferably, the LTE communication card further comprises an LTE power management unit, the SDIO interface further comprises power pins adapted to be selectively inserted into the SDIO card slot of the electronic device, and the LTE power management unit is configured to obtain from the power pins a power signal supplied by the electronic device and adjust the power signal correspondingly to power the LTE baseband processing unit, the LTE transceiving unit and the memory respectively.

Preferably, the SDIO interface, the LTE baseband processing unit, the LTE transceiving unit, the memory and the LTE power management unit are packaged in a card having dimensions of 32 mm×24 mm×2.1 mm.

To achieve the aforesaid objective, the present disclosure further provides an LTE communication system, which comprises an electronic device and an LTE communication card. The electronic device comprises: an SDIO card slot; and a data processing unit connected to the SDIO card slot, being configured to generate a first data signal to the SDIO card slot. The LTE communication card comprises: an SDIO interface, comprising data pins adapted to be selectively inserted into the SDIO card slot; an LTE baseband processing unit connected to the data pins, being configured to obtain the first data signal from the data pins and modulate the first data signal; an LTE transceiving unit connected to the LTE baseband processing unit, being configured to obtain the first data signal that has been modulated; and an antenna unit connected to the LTE transceiving unit, being configured to transmit the first data signal, and further obtain an LTE RF signal from the outside and transmit the LTE RF signal to the LTE transceiving unit, and the LTE RF signal being transmitted by the LTE transceiving unit to the LTE baseband processing unit and then demodulated by the LTE baseband processing unit to obtain a second data signal for transmission to the SDIO card slot via the data pins. The data processing unit further obtains the second data signal from the SDIO card slot. The LTE communication card further comprises a memory connected to the LTE baseband processing unit and configured to store data originally stored in a Universal Subscriber Identity Module (USIM) card or a Subscriber Identity Module (SIM) card, such that the electronic device using the LTE communication card is capable of omitting a card slot for the USIM card or the SIM card. The antenna unit comprises an LTE main antenna and an LTE Multiple-Input Multiple-Output (MIMO) antenna, one of the LTE main antenna and the LTE MIMO antenna is disposed in an edge region opposite to the SDIO interface at a side surface of an enclosure of the LTE communication card, and another of the LTE main antenna and the LTE MIMO antenna is disposed in an edge region opposite to the SDIO interface at an opposite side surface of the enclosure of the LTE communication card.

Preferably, the LTE communication card further comprises a memory connected to the LTE baseband processing unit and configured to store an SIN, an authentication key, an LAI, a TSI, a PIN, an unlock code, telephone book data, subscriber identification authentication data, an encryption algorithm and an encryption key.

Preferably, the electronic device further comprises a power module configured to supply power to the data processing unit and output a power signal to the SDIO card slot, the LTE communication card further comprises an LTE power management unit, the SDIO interface further comprises power pins adapted to be selectively inserted into the SDIO card slot of the electronic device, and the LTE power management unit is configured to obtain the power signal from the power pins and adjust the power signal correspondingly to power the LTE baseband processing unit, the LTE transceiving unit and the memory respectively.

Preferably, the SDIO interface, the LTE baseband processing unit, the LTE transceiving unit, the memory and the LTE power management unit are packaged in a card having dimensions of 32 mm×24 mm×2.1 mm.

As compared to the prior art, the present disclosure has the following benefits: the LTE communication card and the LTE communication system of the present disclosure have the SDIO interface, the LTE baseband processing unit, the LTE transceiving unit and the antenna unit integrated into the LTE communication card, and use the SDIO interface for data transmission. In this way, by inserting the LTE communication card into an electronic device that supports the SDIO protocol, the electronic device can be provided with the LTE wireless communication function. This enriches the functions of the electronic device, improves users' experiences and reduces the production cost. The invention is defined by the appended independent claims 1 and 5.

### BRIEF DESCRIPTION OF THE DRAWINGS

FIG. 1 is a schematic circuit diagram of an LTE communication system according to a first embodiment of the present disclosure;
FIG. 2 is a schematic circuit diagram of an LTE communication system according to a second embodiment of the present disclosure;
FIG. 3 is a perspective front view of an LTE communication card of the present disclosure; and
FIG. 4 is a back view of the LTE communication card of the present disclosure.

### DETAILED DESCRIPTION OF THE INVENTION

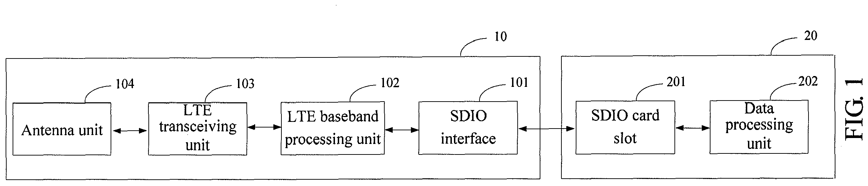

Referring firstly to FIG. 1, there is shown a schematic circuit diagram of an LTE communication system according to a first embodiment of the present disclosure. As shown in FIG. 1, the LTE communication system of the present disclosure comprises an LTE communication card 10 and an electronic device 20 in this embodiment.

The electronic device 20 comprises an SDIO card slot 201 and a data processing unit 202 connected to the SDIO card slot 201. The data processing unit 202 is configured to generate a first data signal to the SDIO card slot and receive a second data signal from the SDIO card slot.

The LTE communication card 10 comprises: an SDIO interface 101, comprising data pins adapted to be selectively inserted into the SDIO card slot 201 of the electronic device 20; an LTE baseband processing unit 102 connected to the data pins, being configured to obtain from the data pins the first data signal supplied by the electronic device 20 and modulate the first data signal; an LTE transceiving unit 103 connected to the LTE baseband processing unit 102, being configured to obtain the first data signal that has been modulated; and an antenna unit 104 connected to the LTE transceiving unit 103, being configured to transmit the first data signal, and further obtain an LTE radio frequency (RF) signal from the outside and transmit the LTE RF signal to the LTE transceiving unit 103. The LTE RF signal is transmitted by the LTE transceiving unit 103 to the LTE baseband processing unit 102 and then demodulated by the LTE baseband processing unit 102 to obtain the second data signal for transmission to the electronic device 20 via the data pins.

Here, the first data signal is an uplink data signal in the communication process, and the second data signal is a downlink data signal in the communication process. In this way, after the LTE communication card 10 is inserted into the SDIO card slot 201 of the electronic device 20, an LTE uplink/downlink data transceiving function will be obtained for the electronic device 20.

The LTE communication card 10 and the electronic device 20 of the present disclosure have the SDIO interface 101, the LTE baseband processing unit 102, the LTE transceiving unit 103 and the antenna unit 104 integrated into the LTE communication card 10, and use the SDIO interface for data transmission. In this way, the electronic device 20 that supports the SDIO protocol can transmit and receive the LTE uplink/downlink data through the LTE communication card 10. Thereby, after the LTE communication card 10 is inserted into the electronic device 20, the LTE wireless communication function can be easily obtained for the electronic device 20. This enriches the functions of the electronic device 20, improves users' experiences and reduces the production cost.

However, in the aforesaid embodiment, the technical solutions of the LTE communication card 10 and the electronic device 20 have been described only from the view point of data transmission, and no description is made on the way in which power is supplied. In the present disclosure, the LTE communication card 10 may be powered by a built-in battery or the electronic device 20, and is preferably powered by the electronic device 20. Therefore, how to use the electronic device 20 to power the LTE communication card 10 will be described in detail hereinblow in a second embodiment of the present disclosure.

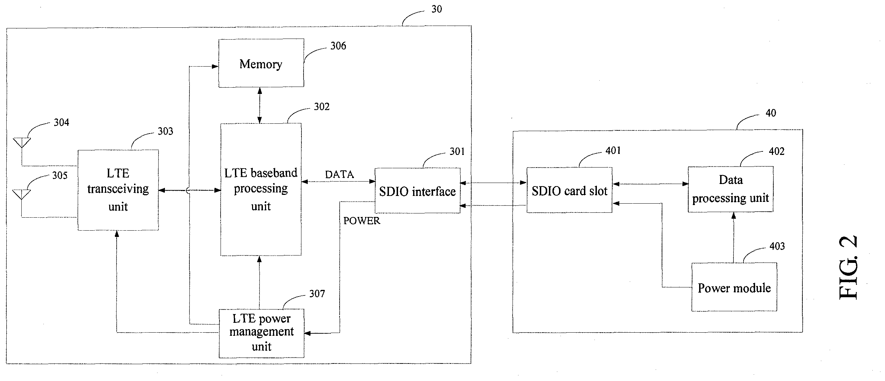

FIG. 2 is a schematic circuit diagram of an LTE communication system according to the second embodiment of the present disclosure. As shown in FIG. 2, the LTE communication system of the present disclosure comprises an electronic device 40 and an LTE communication card 30 in this embodiment.

The electronic device 40 comprises an SDIO card slot 401 and a data processing unit 402 connected to the SDIO card slot 401. The data processing unit 402 is configured to generate a first data signal to the SDIO card slot 401 and receive a second data signal from the SDIO card slot 401.

The LTE communication card 30 comprises: an SDIO interface 301, comprising data pins adapted to be selectively inserted into the SDIO card slot 401; an LTE baseband processing unit 302 connected to the data pins, being configured to obtain the first data signal from the data pins and modulate the first data signal; an LTE transceiving unit 303 connected to the LTE baseband processing unit 302, being configured to obtain the first data signal that has been modulated; and an antenna unit (comprising an LTE main antenna 304 and an LTE Multiple-Input Multiple-Output (MIMO) antenna 305) connected to the LTE transceiving unit 303, being configured to transmit the first data signal, and further obtain an LTE RF signal from the outside and transmit the LTE RF signal to the LTE transceiving unit 303. The LTE RF signal is transmitted by the LTE transceiving unit 303 to the LTE baseband processing unit 302 and then demodulated by the LTE baseband processing unit 302 to obtain the second data signal for transmission to the SDIO card slot 401 via the data pins. The data processing unit 402 further obtains the second data signal from the SDIO card slot 401.

In this embodiment, the LTE communication card 30 may further comprise a memory 306, which is connected to the LTE baseband processing unit 302 and configured to store a subscriber identification number (SIN), an authentication key, a location area identifier (LAI), a temporary subscriber identifier (TSI), a personal identification number (PIN), an unlock code, telephone book data, subscriber identification authentication data, an encryption algorithm and an encryption key. The SIN, the authentication key, the LAI, the TSI, the PIN, the unlock code, the telephone book data, the subscriber identification authentication data, the encryption algorithm and the encryption key are data originally stored in a Universal Subscriber Identity Module (USIM) card or a Subscriber Identity Module (SIM) card, and are now stored in the memory 306. The LTE baseband processing unit 302 may read these data and process these data correspondingly so that the LTE communication card 30 of the present disclosure can be provided with the functions corresponding to the USIM card or the SIM card. Therefore, a card slot for the USIM card or for the SIM card can be omitted from the electronic device 40 through use of the LTE communication card 30 of this embodiment, and this can significantly reduce the space of the electronic device 40 and make the electronic device 40 more lightweight and thinner.

Additionally, the LTE communication card 30 further comprises an LTE power management unit 307; the SDIO interface 301 further comprises power pins adapted to be selectively inserted into the SDIO card slot 401 of the electronic device 40; and the LTE power management unit 307 is configured to obtain from the power pins a power signal supplied by the electronic device 40 and adjust the power signal correspondingly to power the LTE baseband processing unit 302, the LTE transceiving unit 303 and the memory 306 respectively. Correspondingly, the electronic device 40 further comprises a power module 403, which is configured to supply power to the data processing unit 402 and output the power signal to the SDIO card slot 401 so that the LTE power management unit 307 can obtain from the power pins inserted into the SDIO card slot 401 the power signal supplied by the electronic device 40.

Thus, in the second embodiment of the present disclosure, the electronic device 40 is used to supply power to the LTE communication card 30 so that the LTE communication card 30 can also operate normally without a built-in power supply.

Specifically, in this embodiment, the SDIO interface 301, the LTE baseband processing unit 302, the LTE transceiving unit 303, the memory 306 and the LTE power management unit 307 are packaged in a card having dimensions of 32 mm×24 mm×2.1 mm, which is completely identical to a common SD card in shape.

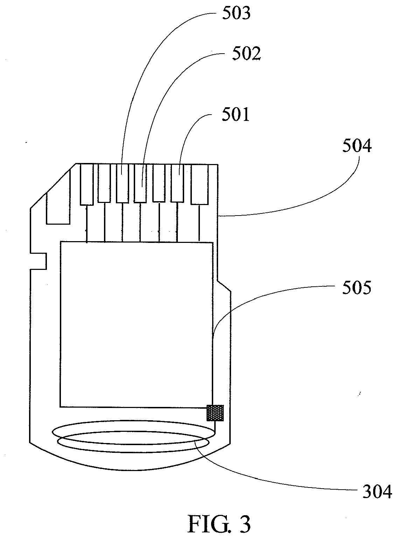

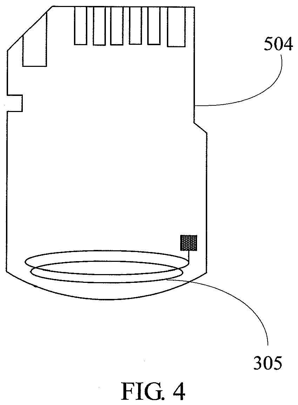

Moreover, the antenna unit comprises the LTE main antenna 304 and the LTE MIMO antenna 305 in this embodiment. The antenna unit is disposed in an edge region of an enclosure of the card that is opposite to the SDIO interface 301. This will be further detailed with reference to FIG. 3 and FIG. 4 hereinbelow. FIG. 3 is a front view of the LTE communication card 30 of the present disclosure, and FIG. 4 is a back view of the LTE communication card 30 of the present disclosure.

Referring further to FIG. 3, there is shown a perspective front view of the LTE communication card of the present disclosure. As shown in FIG. 3, a pin 501 and a pin 503 are ground pins and a pin 502 is a voltage supply pin, so the pin 501, the pin 502 and the pin 503 are just the power pins of the second embodiment while the other pins (not shown) are the data pins of the second embodiment. As shown in FIG. 3, the SDIO interface 301, the LTE baseband processing unit 302, the LTE transceiving unit 303, the memory 306 and the LTE power management unit 307 may be disposed on a circuit board 505. Specifically, as shown in FIG. 3 and FIG. 4, one of the LTE main antenna 304 and the LTE MIMO antenna 305 may be disposed in an edge region opposite to the SDIO interface 301 at a side of an enclosure 504 of the card, and the other of the LTE main antenna 304 and the LTE MIMO antenna 305 may be disposed in an edge region opposite to the SDIO interface 301 at the other side of the enclosure 504 of the card.

Hereinbelow, the specific layout of the LTE communication card will be introduced in detail with reference to FIG. 3 and FIG. 4. As shown in FIG. 3, the LTE main antenna 304 may be disposed in an edge region of the enclosure 504 opposite to the SDIO interface on a front side of the LTE communication card. Referring to FIG. 4, there is shown a back view of the LTE communication card of the present disclosure. The LTE MIMO antenna 305 may be disposed in an edge region of the enclosure 504 opposite to the SDIO interface on a back side of the LTE communication card.

The SDIO interface 301, the LTE baseband processing unit 302, the LTE transceiving unit 303, the memory 306 and the LTE power management unit 307 are packaged in a card having dimensions of 32 mm×24 mm×2.1 mm.

It is worth noting that, the LTE communication system described in the present disclosure includes but is not limited to a mobile phone, a personal computer (PC), a notebook computer, a tablet personal computer, a netbook, a personal digital assistant (PDA) and the like.

Accordingly, the present disclosure discloses an LTE communication card 30 and an LTE communication system, which have the SDIO interface 301, the LTE baseband processing unit 302, the LTE transceiving unit 303 and the antenna unit integrated into the LTE communication card 30, and use the SDIO interface 301 for data transmission. In this way, the electronic device 40 that supports the SDIO protocol can be easily provided with the LTE wireless communication function. This enriches the functions of the electronic device 40, improves users' experiences and reduces the production cost.

What described above are only some of the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. An LTE communication card (10, 30), comprising:
an SDIO interface (101, 301), comprising data pins adapted to be selectively inserted into an SDIO card slot (201, 401) of an electronic device (20, 40);
an LTE baseband processing unit (102, 302) connected to the data pins, being configured to obtain from the data pins a first data signal supplied by the electronic device (20, 40) and modulate the first data signal;
an LTE transceiving unit (103, 303) connected to the LTE baseband processing unit (102, 302), being configured to obtain the first data signal that has been modulated; and
an antenna unit (104, 304 and 305) connected to the LTE transceiving unit (103, 303), being configured to transmit the first data signal, and further obtain an LTE RF signal from the outside and transmit the LTE RF signal to the LTE transceiving unit (103, 303), and the LTE RF signal being transmitted by the LTE transceiving unit (103, 303) to the LTE baseband processing unit (102, 302) and then demodulated by the LTE baseband processing unit (102, 302) to obtain a second data signal for transmission to the electronic device (20, 40) via the data pins;
it is **characterized in that** the LTE communication card (10, 30) further comprises a memory (306) connected to the LTE baseband processing unit (102, 302) and configured to store data originally stored in a Universal Subscriber Identity Module USIM card or a Subscriber Identity Module SIM card, such that the electronic device (20, 40) using the LTE communication card (10, 30) is capable of omitting a card slot for the USIM card or the SIM card;
the antenna unit comprises an LTE main antenna (304) and an LTE Multiple-Input Multiple-Output MIMO antenna (305), one of the LTE main antenna (304) and the LTE MIMO antenna (305) is disposed in an edge region opposite to the SDIO interface (101, 301) at a side of an enclosure (504) of the LTE communication card (10, 30), and another of the LTE main antenna (304) and the LTE MIMO antenna (305) is disposed in an edge region opposite to the SDIO interface (101, 301) at an opposite side of the enclosure (504) of the LTE communication card (10,30).

2. The LTE communication card of claim 1, the data originally stored in the USIM card or the SIM card and currently stored in the memory (306) of the LTE communication card (10, 30), comprises a subscriber identification number SIN, an authentication key, a location area identifier LAI, a temporary subscriber identifier TSI, a personal identification number PIN, an unlock code, telephone book data, subscriber identification authentication data, an encryption algorithm and an encryption key.

3. The LTE communication card of claim 1, further comprising an LTE power management unit (307), the SDIO interface (101, 301) further comprises power pins (501, 502, 503) adapted to be selectively inserted into the SDIO card slot (201, 401) of the electronic device (20, 40), and the LTE power management unit (307) is configured to obtain from the power pins (501, 502, 503) a power signal supplied by the electronic device (20, 40) and adjust the power signal correspondingly to power the LTE baseband processing unit (102, 302), the LTE transceiving unit (103, 303) and the memory (306) respectively.

4. The LTE communication card of claim 1, wherein the SDIO interface (101, 301), the LTE baseband processing unit (102, 302), the LTE transceiving unit (103, 303), the memory (306) and the LTE power management unit (307) are packaged in a card having dimensions of 32 mm×24 mm×2.1 mm.

5. An LTE communication system, comprising:
an electronic device (20, 40), comprising:
an SDIO card slot (201, 401); and
a data processing unit (202, 402) connected to the SDIO card slot (201, 401), being configured to generate a first data signal to the SDIO card slot (201, 401); and an LTE communication card (10, 30), comprising:
an SDIO interface (101, 301), comprising data pins adapted to be selectively inserted into the SDIO card slot (201, 401);
an LTE baseband processing unit (102, 302) connected to the data pins, being configured to obtain the first data signal from the data pins and modulate the first data signal;
an LTE transceiving unit (103, 303) connected to the LTE baseband processing unit (102, 302), being configured to obtain the first data signal that has been modulated; and
an antenna unit (104) connected to the LTE transceiving unit (103, 303), being configured to transmit the first data signal, and further obtain an LTE RF signal from the outside and transmit the LTE RF signal to the LTE transceiving unit (103, 303), and the LTE RF signal being transmitted by the LTE transceiving unit (103, 303) to the LTE baseband processing unit (102, 302) and then demodulated by the LTE baseband processing unit (102, 302) to obtain a second data signal for transmission to the SDIO card slot (201, 401) via the data pins,
wherein the data processing unit (202, 402) further obtains the second data signal from the SDIO card slot (201, 401);
it is **characterized in that** the LTE communication card (10, 30) further comprises a memory (306) connected to the LTE baseband processing unit (102, 302) and configured to store data originally stored in a Universal Subscriber Identity Module USIM card or a Subscriber Identity Module SIM card, such that the electronic device (20, 40) using the LTE communication card (10, 30) is capable of omitting a card slot for the USIM card or the SIM card;
the antenna unit comprises an LTE main antenna (304) and an LTE Multiple-Input Multiple-Output MIMO antenna (305), one of the LTE main antenna (304) and the LTE MIMO antenna (305) is disposed in an edge region opposite to the SDIO interface (101, 301) at a side surface of an enclosure (504) of the LTE communication card (10, 30), and another of the LTE main antenna (304) and the LTE MIMO antenna (305) is disposed in an edge region opposite to the SDIO interface (101, 301) at an opposite side surface of the enclosure (504) of the LTE communication card (10, 30).

6. The LTE communication system of claim 5, wherein the data originally stored in the USIM card or the SIM card and currently stored in the memory (306) of the LTE communication card (10, 30), comprises an SIN, an authentication key, an LAI, a TSI, a PIN, an unlock code, telephone book data, subscriber identification authentication data, an encryption algorithm and an encryption key.

7. The LTE communication system of claim 5, wherein the electronic device (20, 40) further comprises a power module (403) configured to supply power to the data processing unit (202, 402) and output a power signal to the SDIO card slot (201, 401), the LTE communication card (10, 30) further comprises an LTE power management unit (307), the SDIO interface (101, 301) further comprises power pins (501, 502, 503) adapted to be selectively inserted into the SDIO card slot (201, 401) of the electronic device (20, 40), and the LTE power management unit (307) is configured to obtain the power signal from the power pins (501, 502, 503) and adjust the power signal correspondingly to power the LTE baseband processing unit (102, 302), the LTE transceiving unit (103, 303) and the memory (306) respectively.

8. The LTE communication system of claim 5, wherein the SDIO interface (101, 301), the LTE baseband processing unit (102, 302), the LTE transceiving unit (103, 303), the memory (306) and the LTE power management unit (307) are packaged in a card having dimensions of 32 mm×24 mm×2.1 mm.

## Patentansprüche

1. LTE-Kommunikationskarte (10, 30), umfassend: eine SDIO-Zwischenstelle (101, 301), umfassend Datenstifte, die dem wählerischen Einfügen in einen SDIO-Karteschlitz einer elektronischen Vorrichtung (20, 40) angepasst sind (201, 401) ; eine LTE-Grundbandverarbeitungseinheit (102, 302), die mit den Datenstiften verbunden ist und zum Erhalten eines ersten von der elektronischen Vorrichtung (20, 40) versorgten Datensignals und zum Modulieren des ersten Datensignals konfiguriert ist; eine LTE-Sender-Empfängereinheit (103, 303), die mit der LTE-Grundbandverarbeitungseinheit (102, 302) verbunden ist und zum Erhalten des ersten Datensignals, das moduliert worden ist, konfiguriert ist; und eine Antenneneinheit (104, 304 und 305), die mit der LTE-Sender-Empfängereinheit (103, 303) verbunden ist und zur Übertragung des ersten Datensignals, und weiter zum Erhalten eines LTE-RF-Signals von außen und zur Übertragung des LTE-RF-Signals zur LTE-Sender-Empfängereinheit (103, 303) konfiguriert ist, und wobei das LTE-RF-Signal von der LTE-Sender-Empfängereinheit (103, 303) zur LTE-Grundbandverarbeitungseinheit (102, 302) übertragen wird und dann von der Grundbandverarbeitungseinheit (102, 302) zum Erhalten eines zweiten Datensignals, das zur elektronischen Vorrichtung (20,40) über die Datenstifte zu übertragen ist, demoduliert wird; Karte, die **dadurch gekennzeichnet ist, dass** die LTE-Kommunikationskarte (10, 30) weiter einen Speicher (306) umfasst , die mit der LTE-Grundbandverarbeitungseinheit (102, 302) verbunden ist und zum Speichern von ursprünglich in einer universellen Teilnehmer-Identitätsmodulkarte, USIM-Karte, oder in einer Teilnehmer-Identitätsmodulkarte, SIM-Karte, gespeicherten Daten konfiguriert ist, sodass die elektronische Vorrichtung (20, 40), die die LTE-Kommunikationskarte (10,30) benutzt, zum Auslassen eines Kartenschlitzes für die USIM-Karte oder die SIM-Karte fähig ist; die Antenneneinheit eine LTE-Hauptantenne (304) und eine Mehreingangs/Mehrausgangs-MIMO-Antenne (305) umfasst, eine der Hauptantenne (304) und der Mehreingangs/Mehrausgangs-MIMO-Antenne (305) in einem gegenüber der SDIO-Zwischenstelle (101, 301) liegenden Randbereich auf einer Seite des Gehäuses (504) der LTE-Kommunikationskarte (10,30) angeordnet ist, und eine andere der Hauptantenne (304) und der Mehreingangs/Mehrausgangs-MIMO-Antenne (305) in einem gegenüber der SDIO-Zwischenstelle (101, 301) liegenden Randbereich auf der gegenüberliegenden Seite des Gehäuses (504) der LTE-Kommunikationskarte (10,30) angeordnet ist.

2. LTE-Kommunikationskarte nach Anspruch 1, wobei die ursprünglich in der USIM-Karte, oder in der SIM-Karte gespeicherten und gegenwärtig im Speicher (306) der LTE-Kommunikationskarte (10, 30) gespeicherten Daten eine Teilnehmer-Identifikationsnummer SIN, einen Authentifizierungsschlüssel, eine Ortsbereichskennung LAI, eine vorläufige Teilnehmerkennung TSI, eine persönliche Identifikationsnummer PIN, einen Freischaltcode, Telefonbuchdaten, Teilnehmeridentifikationsauthentifizierungsdaten, einen Verschlüsselungsalgorithmus und einen Verschlüsselungsschlüssel umfassen.

3. LTE-Kommunikationskarte nach Anspruch 1, wobei sie eine LTE-Energieverwaltungseinheit (307) umfasst, die SDIO-Zwischenstelle (101, 301) weiter Energiestiften (501, 502, 503), die der wählerischen Einfügung in die SDIO-Kartenschlitz (201, 401) der elektronischen Vorrichtung (20, 40) angepasst sind, und die LTE-Energieverwaltungseinheit (307) zum Erhalten eines von den Energiestiften (501, 502, 503) versorgten Energiesignals und zum entsprechenden Einstellen des Energiesignals, um beziehungsweise die LTE-Grundbandverarbeitungseinheit (102, 302), die LTE-Sender-Empfängereinheit (103, 303) und den Speicher (306) mit Energie zu versorgen, konfiguriert ist.

4. LTE-Kommunikationskarte nach Anspruch 1, wobei die SDIO-Zwischenstelle (101, 301), die LTE-Grundbandverarbeitungseinheit (102, 302), die LTE-Sender-Empfängereinheit (103, 303), der Speicher (306) und die Energieverwaltungseinheit (307) in einer Karte mit den Abmessungen 32 mm x 24 mm x 2,1 mm verpackt sind.

5. LTE-Kommunikationssystem, umfassend: eine elektronische Vorrichtung (20, 40) umfassend: einen SDIO-Kartenschlitz (201, 401) und
eine Datenverarbeitungseinheit (202, 402), die mit dem SDIO-Kartenschlitz (201, 401) verbunden ist und zum Erzeugen eines ersten Datensignals zum SDIO-Kartenschlitz (201, 401) konfiguriert ist; und
eine LTE-Kommunikationskarte (10,30), umfassend: eine SDIO-Zwischenstelle (101, 301) Datenstifte umfassend, die dem wählerischen Einfügen in einen SDIO-Kartenschlitz (201, 401) angepasst sind; eine LTE-Grundbandverarbeitungseinheit (102, 302), die mit den Datenstiften verbunden ist und zum Erhalten des ersten Datensignals von den Datenstiften und zum Modulieren des ersten Datensignals konfiguriert ist; ; eine LTE-Sender-Empfängereinheit (103, 303), die mit der LTE-Grundbandverarbeitungseinheit (102, 302) verbunden ist und zum Erhalten des ersten Datensignals, das moduliert worden ist, konfiguriert ist; und eine Antenneneinheit (104), die mit der LTE-Sender-Empfängereinheit (103, 303) verbunden ist und zur Übertragung des ersten Datensignals, und weiter zum Erhalten eines LTE-RF-Signals von außen und zur Übertragung des LTE-RF-Signals zur LTE-Sender-Empfängereinheit (103, 303) konfiguriert ist, und wobei das LTE-RF-Signal von der LTE-Sender-Empfängereinheit (103, 303) zur LTE-Grundbandverarbeitungseinheit (102, 302) übertragen wird und dann von der Grundbandverarbeitungseinheit (102, 302) zum Erhalten eines zweiten Datensignals, das zum SDIO-Karteschlitz (201, 401) über die Datenstifte zu übertragen ist, demoduliert wird,
wobei die Datenverarbeitungseinheit (202, 402) weiter das zweite Datensignal vom zweiten SDIO-Karteschlitz (201, 401) erhält;
System, das **dadurch gekennzeichnet ist, dass** die LTE-Kommunikationskarte (10, 30) weiter einen Speicher (306) umfasst, die mit der LTE-Grundbandverarbeitungseinheit (102, 302) verbunden ist und zum Speichern von ursprünglich in einer universellen Teilnehmer-Identitätsmodulkarte, USIM-Karte, oder in einer Teilnehmer-Identitätsmodulkarte, SIM-Karte, gespeicherten Daten konfiguriert ist, sodass die elektronische Vorrichtung (20, 40), die die LTE-Kommunikationskarte (10,30) benutzt, zum Auslassen eines Karteschlitzes für die USIM-Karte oder die SIM-Karte fähig ist; die Antenneneinheit eine LTE-Hauptantenne (304) und eine Mehreingangs/Mehrausgangs-MIMO-Antenne (305) umfasst, eine der Hauptantenne (304) und der Mehreingangs/Mehrausgangs-MIMO-Antenne (305) in einem gegenüber der SDIO-Zwischenstelle (101, 301) liegenden Randbereich auf einer Seite des Gehäuses (504) der LTE-Kommunikationskarte (10,30) angeordnet ist, und eine andere der Hauptantenne (304) und der Mehreingangs/Mehrausgangs-MIMO-Antenne (305)) in einem gegenüber der SDIO-Zwischenstelle (101, 301) liegenden Randbereich auf der gegenüberliegenden Seite des Gehäuses (504) der LTE-Kommunikationskarte (10,30) angeordnet ist.

6. LTE-Kommunikationssystem nach Anspruch 5, wobei die ursprünglich in der USIM-Karte, oder in der SIM-Karte gespeicherten und gegenwärtig im Speicher (306) der LTE-Kommunikationskarte (10, 30) gespeicherten Daten eine SIN, einen Authentifizierungsschlüssel, eine LAI, eine vorläufige TSI, eine PIN, einen Freischaltcode, Telefonbuchdaten, Teilnehmeridentifikationsauthentifizierungsdaten, einen Verschlüsselungsalgorithmus und einen Verschlüsselungsschlüssel umfassen.

7. LTE-Kommunikationssystem nach Anspruch 5, wobei die elektronische Vorrichtung (20, 40) weiter ein Energiemodul (403) umfasst, die zur Versorgung von Energie zur Datenverarbeitungseinheit (202, 402) und zur Ausgabe eines Energiesignals zum SDIO-Kartenschlitz (101, 301) konfiguriert ist, die LTE-Kommunikationseinheit weiter Energiestifte (501, 502, 503) umfasst, die der wählerischen Einfügung in die SDIO-Kartenschlitz (201, 401) der elektronischen Vorrichtung (20, 40) angepasst sind, und die LTE-Energieverwaltungseinheit (307) zum Erhalten des Energiesignals von den Energiestiften (501, 502, 503) und zum entsprechenden Einstellen des Energiesignals, um beziehungsweise die LTE-Grundbandverarbeitungseinheit (102, 302), die LTE-Sender-Empfängereinheit (103, 303) und den Speicher (306) mit Energie zu versorgen, konfiguriert ist.

8. LTE-Kommunikationssystem nach Anspruch 5, wobei die SDIO-Kartezwischenstelle (101, 301), die LTE-Grundbandverarbeitungseinheit (102, 302), die LTE-Sender-Empfängereinheit (103, 303), der Speicher (306) und die Energieverwaltungseinheit (307) in einer Karte mit den Abmessungen 32 mm x 24 mm x 2,1 mm verpackt sind.

## Revendications

1. Carte de communication LTE (10,30), comprenant: une interface SDIO (101, 301), comprenant des broches pour données adaptées pour être insérées sélectivement dans un emplacement pour carte SDIO (201, 401) d'un dispositif électronique (20, 40); une unité de traitement en bande passante de base LTE (102,302) connectée aux broches pour données et qui est configurée pour obtenir des broches pour données un premier signal de données fourni par le dispositif électronique (20, 40) et pour moduler le premier signal de données; une unité d'émission-réception LTE (103, 303) connectée à l'unité de traitement en bande passante de base LTE (102, 302) et qui est configurée pour obtenir le premier signal de données qui a été modulé; et une unité formant antenne (104, 304 et 305) connectée à l'unité d'émission-réception LTE (103, 303) et qui est configurée pour transmettre le premier signal de données, et en outre pour obtenir un signal RF LTE de l'extérieur et pour transmettre le signal RF LTE à l'unité d'émission-réception LTE (103, 303), et le signal RF LTE étant transmis par l'unité d'émission-réception LTE (103, 303) à l'unité de traitement en bande passante de base LTE (102, 302) et étant ensuite démodulé par l'unité de traitement en bande passante de base LTE (102, 302) afin d'obtenir un deuxième signal de données destiné à être transmis au dispositif électronique (20, 40) par l'intermédiaire des broches pour données; carte de communication LTE (10,30) **caractérisée en ce qu'**elle comprend en outre une mémoire (306) connectée à l'unité de traitement en bande passante de base LTE (102, 302) et configurée pour stocker des données stockées à l'origine dans une carte de module universel d'identification d'abonné USIM ou dans une carte de module d'identification d'abonné SIM, de sorte que le dispositif électronique (20, 40) utilisant la carte de communication LTE (10,30) soit capable d'ignorer un emplacement pour carte pour la carte USIM ou pour la carte SIM; **en ce que** la carte formant antenne comprend une antenne principale LTE (304) et une antenne MIMO LTE (305) à multiples entrées et à multiples sorties, l'une parmi l'antenne principale LTE (304) et l'antenne MIMO LTE (305) est disposée dans une zone de bord opposée à l'interface SDIO (101, 301) sur un côté de d'une enceinte (504) de la carte de communication LTE (10,30), et une autre parmi l'antenne principale LTE (304) et l'antenne MIMO LTE (305) est disposée dans une zone de bord opposée à l'interface SDIO (101, 301) sur un côté opposé de l'enceinte (504) de la carte de communication LTE (10,30).

2. Carte de communication LTE selon la revendication 1, dans laquelle les données stockées à l'origine dans la carte USIM ou dans la carte SIM et stockées présentement dans la mémoire (306) de la carte de communication LTE (10,30) comprennent un numéro d'identification d'abonné SIN, une clef d'authentification, un identifiant de zone de localisation LAL, un identifiant d'abonné temporaire TSI, un numéro d'identification personnel PIN, un code de déverrouillage, des données d'annuaire téléphonique, des donnés d'authentification d'identification d'abonné, un algorithme de cryptage et une clef de cryptage.

3. Carte de communication LTE selon la revendication 1, dans laquelle une unité de gestion LTE d'énergie électrique (307) est en outre comprise, l'interface SDIO (101, 301) comprend en outre des broches pour énergie électrique (501, 502, 503) adaptées pour être sélectivement insérées dans l'emplacement pour carte SDIO (201, 401) du dispositif électronique (20, 40) et l'unité de gestion LTE d'énergie électrique (307) est configurée pour obtenir des broches pour énergie électrique (501, 502, 503) un signal d'énergie électrique fourni par le dispositif électronique (20, 40) et pour ajuster le signal d'énergie électrique de façon correspondante afin d'alimenter en énergie électrique respectivement l'unité de traitement en bande passante de base LTE (102, 302), l'unité d'émission-réception LTE (103, 303) et la mémoire (306).

4. Carte de communication LTE selon la revendication 1, dans laquelle l'interface SDIO (101, 301), l'unité de traitement en bande passante de base LTE (102, 302), l'unité d'émission-réception LTE (103, 303), la mémoire (306) et l'unité de gestion LTE d'énergie électrique (307) sont emballées dans une carte présentant les dimensions 32 mm x 24 mm x 2,1 mm.

5. Système de communication LTE, comprenant:
un dispositif électronique (20, 40), comprenant: un emplacement pour carte SDIO (201, 401); et une unité de traitement de données (202, 402) connectée à l'emplacement pour carte SDIO (201, 401) et qui est configurée pour générer un premier signal de données vers l'emplacement pour carte SDIO (201, 401); et
une carte de communication LTE (10,30), comprenant: une interface SDIO comprenant des broches pour données adaptées pour être insérées sélectivement dans un emplacement pour carte SDIO (201, 401); une unité de traitement en bande passante de base LTE (102,302) connectée aux broches pour données et qui est configurée pour obtenir des broches pour données le premier signal de données et pour moduler le premier signal de données; une unité d'émission-réception LTE (103, 303) connectée à l'unité de traitement en bande passante de base LTE (102, 302) et qui est configurée pour obtenir le premier signal de données qui a été modulé; et une unité formant antenne (104) connectée à l'unité d'émission-réception LTE (103, 303) et qui est configurée pour transmettre le premier signal de données, et en outre pour obtenir un signal RF LTE de l'extérieur et pour transmettre le signal RF LTE à l'unité d'émission-réception LTE (103, 303), et le signal RF LTE étant transmis par l'unité d'émission-réception LTE (103, 303) à l'unité de traitement en bande passante de base LTE (102, 302) et étant ensuite démodulé par l'unité de traitement en bande passante de base LTE (102, 302) afin d'obtenir un deuxième signal de données destiné à être transmis à l'emplacement pour carte SDIO (201,401) par l'intermédiaire des broches pour données, système dans lequel l'unité de traitement de données (202, 402) obtient en outre le deuxième signal de données de l'emplacement pour carte SDIO (201, 401); le système état **caractérisé en ce que** la carte de communication LTE (10,30) comprend en outre une mémoire (306) connectée à l'unité de traitement en bande passante de base LTE (102, 302) et configurée pour stocker des données stockées à l'origine dans une carte de module universel d'identification d'abonné USIM ou dans une carte de module d'identification d'abonné SIM, de sorte que le dispositif électronique (20, 40) utilisant la carte de communication LTE (10,30) soit capable d'ignorer un emplacement pour carte pour la carte USIM ou pour la carte SIM; **en ce que** l'unité formant antenne comprend une antenne principale LTE (304) et une antenne MIMO LTE (305) à multiples entrées et à multiples sorties, l'une parmi l'antenne principale LTE (304) et l'antenne MIMO LTE (305) est disposée dans une zone de bord opposée à l'interface SDIO (101, 301) sur une surface latérale de l'enceinte (504) de la carte de communication LTE (10,30), et une autre parmi l'antenne principale LTE et l'antenne MIMO LTE (305) est disposée dans une zone de bord opposée à l'interface SDIO (101, 301) sur une surface latérale opposée de l'enceinte (504) de la carte de communication LTE (10,30).

6. Système de communication LTE selon la revendication 5, dans lequel les données stockées à l'origine dans la carte USIM ou dans la carte SIM et stockées présentement dans la mémoire (306) de la carte de communication LTE (10,30) comprennent un SIN, une clef d'authentification, un LAL, un TSI, un PIN, un code de déverrouillage, des données d'annuaire téléphonique, des donnés d'authentification d'identification d'abonné, un algorithme de cryptage et une clef de cryptage.

7. Système de communication LTE selon la revendication 5, dans lequel le dispositif électronique (20, 40) comprend en outre un module d'énergie électrique (403) configuré pour alimenter en énergie électrique l'unité de traitement de données (202, 402) et pour émettre un signal d'énergie vers l'emplacement pour carte SDIO (201, 401), la carte de communication LTE (10,30) comprend en outre une unité de gestion d'énergie électrique LTE (307), l'interface SDIO (101, 301) comprend en outre des broches pour énergie électrique (501, 502, 503) adaptées pour être sélectivement insérées dans l'emplacement pour carte SDIO (201, 401) du dispositif électronique (20, 40) et l'unité de gestion LTE d'énergie électrique (307) est configurée pour obtenir des broches pour énergie électrique (501, 502, 503) le signal d'énergie électrique et pour ajuster le signal d'énergie électrique de façon correspondante afin d'alimenter en énergie électrique respectivement l'unité de traitement en bande passante de base LTE (102, 302), l'unité d'émission-réception LTE (103, 303) et la mémoire (306).

8. Système de communication LTE selon la revendication 5, dans lequel l'interface SDIO (101, 301), l'unité de traitement en bande passante de base LTE (102, 302), l'unité d'émission-réception LTE (103, 303), la mémoire (306) et l'unité de gestion LTE d'énergie électrique (307) sont emballées dans une carte présentant les dimensions 32 mm x 24 mm x 2,1 mm.
